# EUROPEAN PATENT APPLICATION

(11) **EP 4 191 282 A1**
(43) Date of publication of application: **07.06.2023**
(21) Application number: 21853348.7
(22) Date of filing: 04.08.2021
(51) Int. Cl.: G01S 17/02

(54) **OPTICAL SYSTEM OF LASER RADAR AND LASER RADAR SYSTEM**

(30) Priority: 05.08.2020 CN 202010780165
(71) Applicant: Zvision Technologies Co., Ltd., Beijing 100089 (CN)
(72) Inventor: LIU, Jiayao, Beijing 100089 (CN); MENG, Xiandong, Beijing 100089 (CN); SHI, Tuo, Beijing 100089 (CN)
(74) Representative: DehnsGermany Partnerschaft von Patentanwälten
(86) International application number: PCT/CN2021/110661
(87) International publication number: WO 2022/028496

(57) **Abstract**

An optical system of a laser radar is provided, which includes: a laser emitting module (100) configured to emit an initial beam; a beam splitting conversion module (200) configured to split the initial beam; a first lens group (05) including at least two focusing lenses having different focal lengths, and configured to focus split beams; a reflective mirror group (06) including at least two reflective mirrors and configured to reflect at least two focused beams to a MEMS scanning module (07); the MEMS scanning module (07) configured to reflect the received at least two focused beams, receive return light formed by the received at least two focused beams when being reflected back, and reflect the return light to the reflective mirror group (06), in which the reflective mirror group (06) reflects the return light, the return light is outputted to the beam splitting conversion module (200) via the first lens group (05), and the beam splitting conversion module (200) converts the received return light into linearly polarized light and outputs the linearly polarized light; and a laser receiving module (300) configured to output a light detection value based on the received linearly polarized light. A laser radar system is further provided.

## Description

This application is based on and claims a priority to Chinese Patent Application No. 202010780165.0, filed on August 5, 2020, the entire disclosure of which is incorporated herein by reference.

### FIELD

The present disclosure relates to, but is not limited to, the field of laser radar technologies, and more particularly, to an optical system of a laser radar and a laser radar system.

### BACKGROUND

A laser radar measures a position, a speed, and other information of a target object by emitting a laser beam and receiving a reflected beam. With the rapid development of autonomous driving technology, a coaxial Micro-Electro-Mechanical System (MEMS) laser radar is widely used due to a common optical path for emission and reception and a high signal-to-noise ratio.

However, the coaxial MEMS laser radar in the related art has problems such as a low scanning field of view and a small detection angle.

### SUMMARY

Embodiments of the present disclosure provide an optical system of a laser radar and a laser radar system.

In a first aspect, an optical system of a laser radar is provided according to embodiments of the present disclosure. The optical system of the laser radar includes a laser emitting module, a beam splitting conversion module, a first lens group, a reflective mirror group, a Micro-Electro-Mechanical System (MEMS) scanning module, and a laser receiving module. The laser emitting module is configured to emit an initial beam. The beam splitting conversion module is configured to split the initial beam and output split beams to the first lens group. The first lens group is disposed on a side of the beam splitting conversion module on which a beam is outputted in a first direction, includes at least two focusing lenses having different focal lengths, and is configured to focus the split beams to obtain at least two focused beams and output the at least two focused beams to the reflective mirror group. The reflective mirror group includes at least two reflective mirrors and is configured to reflect the received at least two focused beams to the MEMS scanning module, and the at least two reflective mirrors correspond to the at least two focusing lenses in the first lens group in a one-to-one correspondence. The MEMS scanning module is configured to reflect the received at least two focused beams at a controllable deflection angle, receive return light formed by the received at least two focused beams when being reflected back, and reflect the return light to the reflective mirror group. The reflective mirror group is further configured to reflect the return light to the first lens group, and the return light is outputted to the beam splitting conversion module via the first lens group. The beam splitting conversion module is further configured to output the received return light to the laser receiving module. The laser receiving module is disposed on a side of the beam splitting conversion module on which a beam is outputted in a second direction, and is configured to output a light detection value based on the received return light.

Based on the above solution, the laser emitting module includes: a laser group configured to emit the initial beam; and a collimating lens group disposed on a side of the laser group on which a beam is emitted, and configured to collimate and output the initial beam.

Based on any of the above solutions, the beam splitting conversion module includes a beam splitting unit and a quarter-wave plate. The beam splitting unit includes a polarizing beam splitter. The beam splitting unit is disposed on a side of the laser emitting module on which a beam is outputted, and is configured to split the initial beam and output linearly polarized light to the quarter-wave plate, or is configured to output linearly polarized light outputted by the quarter-wave plate to the laser receiving module. The quarter-wave plate is configured to convert the linearly polarized light into circularly polarized light or convert circularly polarized light into linearly polarized light. Each of the beam splitting unit, the quarter-wave plate, and the first lens group is disposed in the first direction.

Based on any of the above solutions, double-side coating is performed on the quarter-wave plate and each of the at least two focusing lenses in the first lens group.

Based on any of the above solutions, each of the at least two reflective mirrors in the reflective mirror group is a dielectric film reflective mirror or a metallic reflective mirror.

Based on any of the above solutions, the optical system of the laser radar further includes a beam expanding lens configured to expand and output the at least two focused beams reflected by the MEMS scanning module.

Based on any of the above solutions, positions of focal points of the at least two focused beams reflected by the reflective mirror group are at equal distances from a position of a center point of the MEMS scanning module.

Based on any of the above solutions, in focal points of the at least two focused beams reflected by the reflective mirror group, an included angle between focal points of any two adjacent focused beams of the at least two focused beams, with a center point of the MEMS scanning module as a vertex, is equal to a predetermined multiple of a maximum swing angle of the MEMS scanning module.

Based on any of the above solutions, the predetermined multiple is 4.

Based on any of the above solutions, the first direction is perpendicular to the second direction.

Based on any of the above solutions, the laser receiving module includes a second lens group and a photosensitive detection module. The second lens group includes at least two focusing lenses having a same focal length. Each of the at least two focusing lenses is configured to focus received linearly polarized light onto the photosensitive detection module, and the number of focusing lenses in the second lens group is identical to the number of focusing lenses in the first lens group. The photosensitive detection module is disposed on a side of the second lens group on which a beam is outputted and includes at least two photosensitive detectors. The at least two photosensitive detectors correspond to the at least two focusing lenses in the second lens group in a one-to-one correspondence. Each of the at least two photosensitive detectors is configured to receive a beam focused by a corresponding focusing lens and output a corresponding light detection value.

In a second aspect, a laser radar system is provided according to embodiments of the present disclosure. The laser radar system includes an information processing module and the optical system of the laser radar according to any embodiment in the first aspect. The information processing module is configured to output target information based on the light detection value outputted by the optical system of the laser radar.

Related techniques of the optical system of the laser radar and the laser radar system according to the embodiments of the present disclosure include the laser emitting module, the beam splitting conversion module, the first lens group, the reflective mirror group, the MEMS scanning module, and the laser receiving module, which has a simple structure and low cost. The laser emitting module is configured to emit the initial beam. The beam splitting conversion module is configured to split the initial beam and output the split beams to the first lens group. The first lens group, which includes the at least two focusing lenses having different focal lengths, is configured to focus the split beams to obtain the at least two focused beams, and output the at least two focused beams to the reflective mirror group. The reflective mirror group, which includes the at least two reflective mirrors, is configured to reflect the received at least two focused beams to the MEMS scanning module. The at least two reflective mirrors correspond to the at least two focusing lenses in the first lens group in a one-to-one correspondence. The MEMS scanning module is configured to reflect the received at least two focused beams to a target at the controllable deflection angle to scan the target. Thus, a beam width of outgoing light from the MEMS is increased and a clear aperture of the system is enlarged, without lowering a scanning field of view of the outgoing light, thereby realizing scanning the target.

In addition, the MEMS scanning module is further configured to receive return light reflected by the target, and reflect the return light to the reflective mirror group. The reflective mirror group is configured to reflect the return light to the first lens group. The return light is outputted to the beam splitting conversion module via the first lens group. The beam splitting conversion module is configured to convert the received return light into linearly polarized light and output the linearly polarized light to the laser receiving module. The laser receiving module is configured to output the light detection value based on the received linearly polarized light. In this way, detection of the target is achieved. In addition, a coaxial arrangement of reception and emission improves a signal-to-noise ratio and increases utilization of optical energy.

It can be appreciated that the above general description and the following detailed description are exemplary and explanatory only and do not limit the embodiments of the present disclosure.

### BRIEF DESCRIPTION OF THE DRAWINGS

The accompanying drawings herein are incorporated into and constitute a part of the specification, and illustrate principles consistent with embodiments of the present disclosure and used in conjunction with the specification to explain the embodiments of the present disclosure.
FIG. 1 is a schematic structural diagram of an optical system of a laser radar according to an embodiment of the present disclosure.
FIG. 2 is a schematic diagram of a path to emit an initial beam according to an embodiment of the present disclosure.
FIG. 3 is a schematic diagram of a position of a focal point of a focused beam according to an embodiment of the present disclosure.
FIG. 4 is a schematic diagram of a beam passing through a beam expanding lens according to an embodiment of the present disclosure.
FIG. 5 is a schematic diagram of a path to receive a beam reflected from a target according to an embodiment of the present disclosure.

### DETAILED DESCRIPTION

In the following description, specific details such as particular system structures, techniques, and the like are presented for the purpose of illustration rather than limitation, to facilitate a thorough understanding of embodiments of the present disclosure. However, it should be clear to those skilled in the art that the present disclosure can be implemented in other embodiments without these specific details. In other instances, detailed descriptions of well-known systems, apparatuses, circuits, and methods are omitted to prevent unnecessary details from interfering with the description of the present disclosure.

Technical solutions described in the present disclosure will be described below by means of specific embodiments.

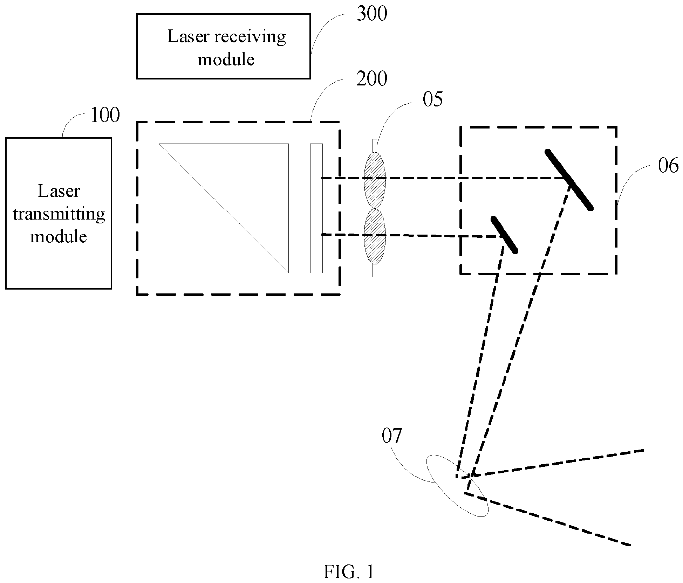

It is found that, to meet a vibration requirement in vehicle regulations, a Micro-Electro-Mechanical System (MEMS) generally has a relatively small aperture. However, such a small aperture limits a clear aperture of an entire radar system, which leads to limited echo energy of a beam, and lowers utilization of optical energy. Although a coaxial MEMS scheme can reduce noises (ambient light), the clear aperture limited by the aperture of the MEMS leads to a not far enough detection distance. It is conceivable from the optical invariant theory that, the clear aperture, when increased, will inevitably lead to a decrease in an overall scanning field of view of outgoing light, thereby reducing a detection angle of the entire radar system. In view of this, referring to FIG. 1, an optical system of a laser radar is provided according to embodiments. For ease of illustration, only parts of the optical system of the laser radar relevant to the embodiments are illustrated.

The optical system of the laser radar according to the embodiments mainly includes a laser emitting module 100, a beam splitting conversion module 200, a first lens group 05, a reflective mirror group 06, an MEMS scanning module 07, and a laser receiving module 300.

The beam splitting conversion module 200 is disposed on a side of the laser emitting module 100 on which a beam is outputted. The laser emitting module 100 is disposed in a first direction of the beam splitting conversion module 200. For example, the laser emitting module 100 is disposed in a horizontal direction or a vertical direction of the beam splitting conversion module 200. The laser receiving module 300 is disposed on a side of the beam splitting conversion module 200 on which a beam is outputted in a second direction. That is, the laser receiving module 300 is disposed in the second direction of the beam splitting conversion module 200. For example, the laser receiving module 300 is disposed in the vertical direction of the beam splitting conversion module 200 or the laser receiving module 300 is disposed in the vertical direction of the beam splitting conversion module 200. That is, the first direction and the second direction are perpendicular to each other.

The first lens group 05 is disposed on a side of the beam splitting conversion module 200 on which a beam is outputted in the first direction. That is, the first lens group 05 is disposed in the first direction of the beam splitting conversion module 200. For example, the first lens group 05 is disposed in the horizontal direction or the vertical direction of the beam splitting conversion module 200. The first lens group 05 includes at least two focusing lenses having different focal lengths. The reflective mirror group 06 includes at least two reflective mirrors. The at least two reflective mirrors correspond to the at least two focusing lenses in the first lens group 05 are in a one-to-one correspondence, i.e., in equal numbers.

The beam splitting conversion module 200, the first lens group 05, and the reflective mirror group 06 may be disposed in a same direction.

In practice, to meet the vibration requirement in the vehicle regulations, the MEMS generally has a relatively small aperture, which limits the clear aperture of the entire radar system, resulting in limited echo energy of the beam. The limited echo energy of the beam in turn leads to the not far enough detection distance. In addition, in the related art, a beam expanding system is added after the MEMS to increase the aperture. However, it is conceivable from the optical invariant theory that an increase of the clear aperture will inevitably lead to a decrease in the overall scanning Field of View (FOV) of the outgoing light, thereby reducing the detection angle of the entire radar system.

Therefore, the embodiments provide the optical system of the laser radar, which solves problems of a small clear aperture of a coaxial MEMS laser radar system and a short detection distance resulting from a limited echo aperture of the MEMS laser radar. Since the coaxial laser radar has a common optical path for emission and reception, only one angle of ambient light (noise) enters an Avalanche Photo Diode (APD) channel of the radar system for reception during reception of light reflected from a target, thereby leading to a high signal-to-noise ratio. Thus, the embodiments provide an optical system of the coaxial MEMS laser radar.

In an embodiment, the laser emitting module 100 is configured to emit an initial beam. The laser emitting module 100 may be configured to emit the initial beam towards the target.

The beam splitting conversion module 200 is configured to split the initial beam and output split beams to the first lens group 05. For example, the beam splitting conversion module 200 may be configured to split the initial beam into a yellow beam and a red beam. The first lens group 05 may be configured to focus the split beams to obtain at least two focused beams and output the at least two focused beams to the reflective mirror group 06. The reflective mirror group 06 may be configured to reflect the received at least two focused beams to the MEMS scanning module 07. The MEMS scanning module 07 may be configured to reflect the received at least two focused beams to the target at a controllable deflection angle to scan the target. According to the embodiments, the first lens group 05 and the reflective mirror group 06 are provided, thereby bringing an increased beam width of outgoing light from the MEMS and an enlarged clear aperture of the system, without lowering the scanning field of view of the outgoing light.

The MEMS scanning module 07 is further configured to receive reflected return light and reflect the reflected return light to the reflective mirror group 06.

For example, the MEMS scanning module 07 is further configured to receive return light reflected from the target and reflect the return light to the reflective mirror group 06. The reflective mirror group 06 is further configured to reflect the return light to the first lens group 05. The return light is outputted through the first lens group 06 to the beam splitting conversion module 200 that is configured to output the received return light to the laser receiving module 300. The laser receiving module 300 is configured to output a light detection value based on the received return light. In this way, detection of the target is achieved. In addition, a coaxial arrangement of the reception and emission of the laser improves the signal-to-noise ratio and increases utilization of optical energy.

With the above optical system of the laser radar, the clear aperture of the system can be directly enlarged without lowering the scanning field of view of the outgoing light, and utilization of optical energy of a light source can be increased. In addition, a coaxial design of the reception and emission according to the embodiments improves the signal-to-noise ratio.

In an embodiment, a surface of each focusing lens in the first lens group 05 according to the embodiments may be any of an aspheric surface, a spherical surface, or a freeform surface.

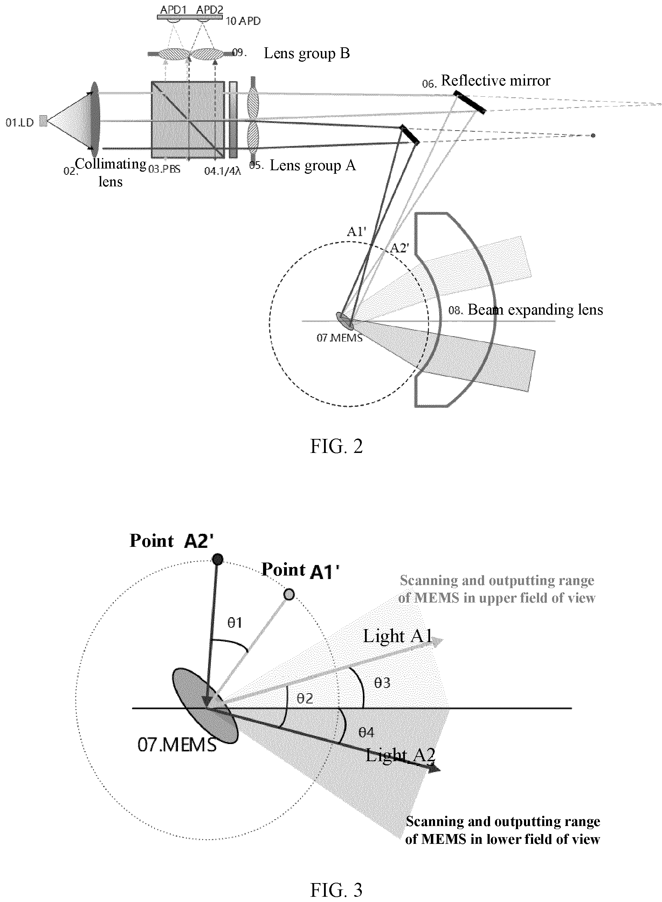

In an embodiment, referring to FIG. 2, the laser emitting module 100 includes a laser group 01 and a collimating lens group 02.

The laser group 01 is configured to emit the initial beam. The collimating lens group 02 is disposed on a side of the laser group 01 on which a beam is emitted and configured to collimate the initial beam. The beam is outputted in a collimated light manner, which ensures a transmission quality of the laser beam and filters out interference. The laser group 01 is configured to emit the initial beam towards the target.

In an embodiment, the laser group 01 may include at least one laser. For example, the laser may be configured to emit a light with a wavelength ranging from 905 nm to 1,550 nm, and with a characteristic of high polarization, e.g., TE/(TE+TM)>98%. The laser may have high thermal stability, high power, and low power consumption. The laser may be a semiconductor laser, a fiber laser, etc. The type of the laser is not limited in the embodiments.

In an embodiment, the collimating lens group 02 may be one collimating lens or may include a plurality of collimating lenses.

In an embodiment, the beam splitting conversion module 200 includes a semi-transparent and semi-reflective mirror. The semi-transparent and semi-reflective mirror is configured to split the initial beam, with a portion of light outputted to the reflective mirror group 06, or split the return light reflected from the reflective mirror group 06, with a portion of light outputted to the laser receiving module 300.

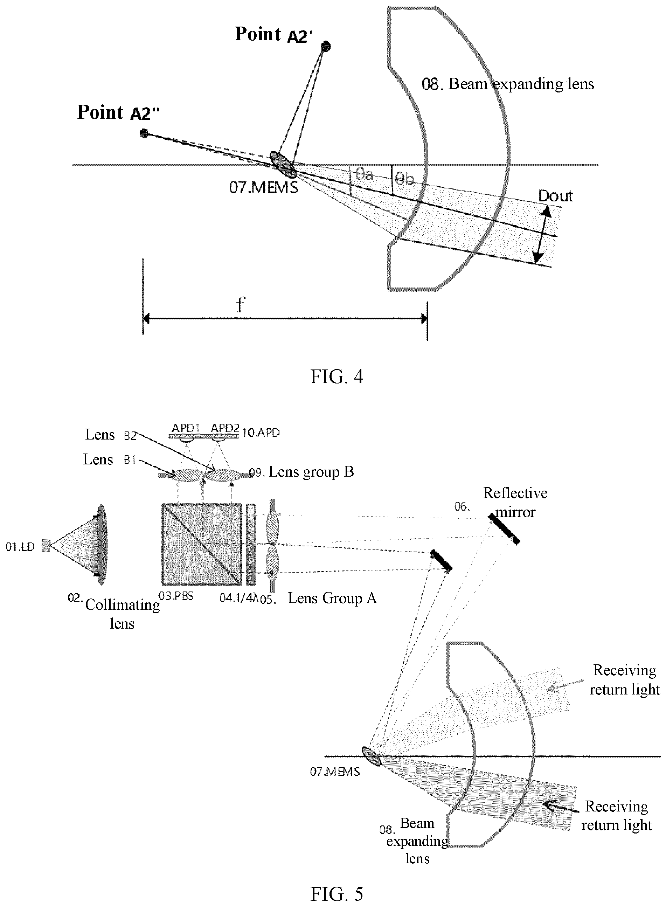

In an embodiment, referring to FIG. 2 or FIG. 5, the beam splitting conversion module 200 includes a beam splitting unit 03 and a quarter-wave plate 04. The beam splitting unit 03 includes a polarizing beam splitter.

The beam splitting unit 03, the quarter-wave plate 04, and the first lens group 05 are all disposed in the first direction.

The beam splitting unit 03 is disposed on a side of the laser emitting module 100 on which a beam is outputted, and is configured to split the initial beam and output linearly polarized light to the quarter-wave plate 04, or is configured to output linearly polarized light outputted by the quarter-wave plate 04 to the laser receiving module 300.

The beam splitting unit 03 has a characteristic of transmitting TE light and reflecting TM light or transmitting TM light and reflecting TE light. For example, as illustrated in FIG. 2, when the laser emitting module 100 is disposed in a horizontal direction of the beam splitting unit 03, the beam splitting unit 03 is configured to reflect TM light of the initial beam and transmit TE light of the initial beam to the quarter-wave plate 04, and the quarter-wave plate 04 is configured to output a plurality of beams; and when the laser emitting module 100 is disposed in a vertical direction of the beam splitting unit 03, the beam splitting unit 03 is configured to transmit the TM light of the initial beam, and reflect the TE light of the initial beam to the quarter-wave plate 04. Similarly, referring to FIG. 5, when the laser receiving module 300 is disposed in the horizontal direction of the beam splitting unit 03, the beam splitting unit 03 is configured to reflect TE light of the linearly polarized light, and transmit TM light of the linearly polarized light to the laser receiving module 300; and when the laser receiving module 300 is disposed in the vertical direction of the beam splitting unit 03, the beam splitting unit 03 is configured to transmit the TE light of the linearly polarized light, and reflect the TM light of the linearly polarized light to the laser receiving module 300.

In an embodiment, the beam splitting unit 03 according to the embodiments may be a polarizing beam splitter or a semi-transparent and semi-reflective mirror. Preferably, the beam splitting unit 03 according to the embodiments is a polarizing beam splitter, which reduces a loss of optical energy.

The quarter-wave plate 04 is configured to convert the linearly polarized light into circularly polarized light or to convert circularly polarized light into linearly polarized light. For example, after passing through the first lens group 05, collimated light passing through the quarter-wave plate 04 will be focused at different positions of focal points, as illustrated in FIG. 2. The reflective mirror group 06 is configured to reflect the at least two focused beams onto the MEMS scanning module 07 or reflect the beam reflected from the MEMS scanning module 07 to the first lens group 05.

In an embodiment, double-side coating is performed on the quarter-wave plate 04 and each focusing lens in the first lens group 05. The double-side coating on the quarter-wave plate 04 can reduce sensitivity of the quarter-wave plate 04 to angles and wavelengths.

In an embodiment, each reflective mirror in the reflective mirror group 06 is a dielectric film reflective mirror or a metallic reflective mirror.

Positions of the reflective mirror group 06 and the MEMS scanning module 07 are not limited in the embodiments. In an embodiment, the positions of the reflective mirror group 06 and the MEMS scanning module 07 may be determined based on a position of the laser emitting module 100, as long as the reflective mirror group 06 can reflect all the received initial beams to the MEMS scanning module 07. For example, the reflective mirror group 06 is on a same horizontal line as the laser emitting module 100, the reflective mirror group 06 may be set at an angle of 30° to reflect a plurality of initial beams all onto a reflective surface of the MEMS scanning module 07. For another example, the reflective mirror group 06 is not on a same horizontal line as the laser emitting module 100, the reflective mirror group 06 may be set vertically to reflect the plurality of initial beams all onto the reflective surface of the MEMS scanning module 07.

In an embodiment, the MEMS scanning module 07 is configured to reflect the received at least two focused beams at a controllable deflection angle, receive return light formed by the received at least two focused beams when being reflected back, and reflect the return light to the reflective mirror group 06.

For example, referring to FIG. 2 or FIG. 5, the MEMS scanning module 07 is a micro-electro-mechanical optical scanning apparatus. The micro-electro-mechanical optical scanning apparatus 07 is configured to reflect both the received at least two focused beams, i.e., scan and output a beam projected onto a reflective mirror of the micro-electro-mechanical optical scanning apparatus 07 in a two-dimensional direction to enable scanning the target, or receive the return light reflected from the target and reflect the return light to the reflective mirror group 06.

The optical system according to the embodiments further includes a beam expanding lens 08 configured to expand and output the reflected at least two focused beams. For example, the beam expanding lens 08 is configured to expand the reflected at least two focused beams and output the expanded beams to the target, thereby enabling scanning the target with a large field of view.

In an embodiment, a size of a reflective surface of the reflective mirror in the micro-electro-mechanical optical scanning apparatus may be determined based on a resonant frequency of the reflective mirror of the MEMS, but should meet requirements in the vehicle regulations.

In an embodiment, the beam expanding lens 08 according to the embodiments may be one beam expanding lens, or may include a plurality of beam expanding lenses, or may be one beam expanding lens having a large area and shared by a plurality of beams, or may be different beam expanding lenses for different beams. That is, the number of beam expanding lenses is not limited in the embodiments.

In an embodiment, the positions of focal points of the at least two focused beams reflected by the reflective mirror group 06 according to the embodiments are at equal distances from a position of the center point of the MEMS scanning module 07.

In a further embodiment, referring to FIG. 2 and FIG. 3, the reflective mirror group 06 may include a reflective mirror 1 and a reflective mirror 2. The reflective mirror 1 is configured to reflect light A1. A focal point of the reflected light A1 is at position A1'. The reflective mirror 2 is configured to reflect light A2. A focal point of the reflected light A2 is at position A2'. Positions of focal point A1' and focal point A2' relative to the MEMS scanning module 07 should be on a same circumference with the MEMS scanning module 07 as a center of the circle. That is, both focal points are at equal distances from the position of the center point of the MEMS scanning module 07, which can ensure that beams reflected from the reflective mirror group 06 are outputted onto the MEMS scanning module 07 and that the return light received by the MEMS scanning module 07 can be reflected to the reflective mirror group 06, thereby ensuring utilization of laser.

In an embodiment, in the focal points of the at least two focused beams reflected by the reflective mirror group 06, an included angle between focal points of any two adjacent focused beams of the at least two focused beams, with the center point of the MEMS scanning module 07 as a vertex, is equal to a predetermined multiple of a maximum swing angle of the MEMS scanning module 07.

The predetermined multiple may take any value of, specifically, 2, 3, 4, 6, etc. For example, referring to FIG. 3, an included angle between focal point A1' and focal point A2' is equal to the maximum swing angle of the MEMS scanning module*4.

In an embodiment, light A1 is light outputted from an upper field of view via the MEMS scanning module 07 and light A2 is light outputted from a lower field of view via the MEMS scanning module 07. An angle *θ*3 of light A1 after being reflected by the MEMS scanning module 07, with respect to a horizontal line=an angle *θ*4 of light A2 after being reflected by the MEMS scanning module 07, with respect to the horizontal line. In addition, *θ*3=*θ*4=2^{∗}maximum swing angle of the MEMS scanning module 07. In an initial immobile state of the MEMS scanning module 07, an included angle between the light outputted from the upper and lower fields of view via the MEMS scanning module 07 *θ*2 is equal to 2^{∗}*θ*3. To this end, the included angle *θ*1 between points A1' and A2'=*θ*2=4^{∗}maximum swing angle of the MEMS scanning module 07.

For example, a process of scanning the target at an emitting end is illustrated according to a specific structure in FIG. 2. A beam emitted from the laser group 01 is collimated, shaped into parallel light, and outputted by the collimating lens group 02. The collimated beam passes through the beam splitting unit 03 and is transmitted forward. TE light (or TM light) is transmitted and TM light (or TE light) is lost (due to a high polarization ratio of the laser group 01, a percentage of lost light is smaller than 2%).

The light passing through the beam splitting unit 03 becomes purely linearly polarized light which, after passing through the quarter-wave plate 04, becomes circularly polarized light which passes through the lens group A (first lens group 05). Lens group A consists of a plurality of focusing lenses having unequal focal lengths. Taking two focusing lenses in FIG. 2 as an example for description, focusing lens 1 and focusing lens 2 have unequal focal lengths. The collimated circularly polarized light will be focused at different positions of focal points after passing through the focusing lens 1 and the focusing lens 2, as illustrated in FIG. 2.

Reflective mirror 1 and reflective mirror 2 in the reflective mirror group 06 are configured to reflect light A1 and light A2, respectively, and direct the reflected light A1 and light A2 to the MEMS scanning module 07. The MEMS scanning module 07 is configured to scan the outputted beams. The widths of the outputted beams are expanded by the beam expanding lens 08, which increases a light outgoing aperture and the field of view, so that when receiving the echo, a light incident aperture of an echo optical path is the light outgoing aperture described above. That is, the light incident aperture is increased. As illustrated in FIG. 4, the light outgoing aperture is expanded.

Referring to FIG. 4, *θa* represents an angle of a beam scanned and outputted by the MEMS, *θb* represents a light outgoing angle of the beam after passing through the beam expanding lens 08, where *θa* > *θb.* DMEMS represents an aperture of the MEMS. Dout represents a width of an outgoing beam. A relationship between *θa, θb,* DMEMS, and Dout is tan *(θa* )/tan (*θb* )=Dout /DMEMS.

An increase in the width of the outgoing beam leads to a reduction in the angle of the outgoing beam (reduced field of view). However, the first lens group 05 and the reflective mirror group 06 are added according to the embodiments to expand the field of view of the beam scanned and outputted by the micro-electro-mechanical optical scanning apparatus 07 in advance. Therefore, taken together, the overall field of view is not reduced.

In an embodiment, referring to FIG. 5, the laser receiving module 300 includes a second lens group 09 and a photosensitive detection module 10.

The second lens group 09 includes at least two focusing lenses having a same focal length, each of which being configured to focus received linearly polarized light onto the photosensitive detection module 10. Referring to FIG. 5, the second lens group 09 (lens group B) is a receiving lens group, lenses in which have equal focal lengths. The number of lenses and an aperture size of the second lens group 09 shall be equal to those of the first lens group 05 (lens group A). That is, the number of focusing lenses in the second lens group 09, the number of focusing lenses in the first lens group 05, and the number of reflective mirrors in the reflective mirror group 06 are equal to each other. The second lens group 09 is configured to receive an echo beam and focus the echo beam collimated by the optical system onto a photosensitive surface of the photosensitive detection module 10.

The photosensitive detection module 10 is disposed on a side of the second lens group 09 on which a beam is outputted and includes at least two photosensitive detectors. The at least two photosensitive detectors correspond to the at least two focusing lenses in the second lens group 09 in a one-to-one correspondence. Each photosensitive detector is configured to receive a beam focused by a corresponding focusing lens and output a corresponding light detection value.

Reference may be made to FIG. 5, which is a schematic diagram of a path to receive a beam reflected from a target according to an embodiment of the present disclosure. Since a coaxial optical path for reception and emission is designed in the present disclosure, a receiving optical path will be briefly described below.

In an embodiment, the received return light returns in an original path, passes through the beam expanding lens 08, and then is reflected by the MEMS to the reflective mirror group 06. The reflective mirror group 06 is configured to reflect the return light to lens group A. The circularly polarized light passing through lens group A becomes TM linearly polarized light after passing through the quarter-wave plate 04, is reflected by the beam splitting unit 03, and is directed to receiving lens group B.

In an embodiment, as illustrated in FIG. 5, lens group B may include two focusing lenses B 1 and B2 having equal focal lengths. Since paths of beams from the upper and lower fields of view in the beam splitting unit 03 do not overlap each other, the beams from the upper and lower fields of view, after being deflected and outputted by the beam splitting unit 03, pass through focusing lens B 1 and focusing lens B2, respectively. Focusing lens B 1 is configured to focus the beam from the upper field of view on APD 1 (photosensitive detector). Focusing lens B2 is configured to focus the beam from the lower field of view on APD2. That is, APD 1 is used for receiving and detecting the beam from the upper field of view and APD2 is used for receiving and detecting the beam from the lower field of view. One photosensitive detector can only receive ambient light from a single angle at the same time when receiving return signal light from a certain angle, which can improve a signal-to-noise ratio of the system and increase the utilization of optical energy.

In the above embodiments, the laser light is received and emitted coaxially, which improves the signal-to-noise ratio of the system. The beam splitting conversion module 200 is configured to split and output the initial beam. The focusing lenses in the first lens group 05 are configured to focus the split beams to obtain the at least two focused beams and output the at least two focused beams to the reflective mirror group 06. Reflective mirrors in the reflective mirror group 06 correspond to the focusing lenses in the first lens group 05 in a one-to-one correspondence, and are configured to reflect the received at least two focused beams to the MEMS scanning module 07. The MEMS scanning module 07 is configured to reflect the received at least two focused beams at a controllable deflection angle and the beam expanding lens 08 is configured to expand the beams to scan the target with a large field of view. Thus, the beam width of the outgoing light from the MEMS is increased and the clear aperture of the system is enlarged, without lowering the scanning field of view of the outgoing light, thereby enabling scanning the target.

The MEMS scanning module 07 is further configured to receive the return light reflected back, and reflect the return light to the reflective mirror group 06 that is configured to reflect the return light to the first lens group 05. For example, the MEMS scanning module 07 is further configured to receive the return light reflected from the target, and reflect the return light to the reflective mirror group 06. The reflective mirror group 06 is configured to reflect the return light to the first lens group 05.

The return light is outputted to the beam splitting conversion module 200 via the first lens group 05. The beam splitting conversion module 200 is configured to convert the received return light into linearly polarized light and output the linearly polarized light to the laser receiving module 300. The laser receiving module 300 is configured to output the light detection value based on the received linearly polarized light. Thus, a detection of the target is realized. In addition, one photosensitive detector can only receive ambient light from a single angle at the same time when receiving return signal light from a certain angle, which can improve the signal-to-noise ratio of the system and increase the utilization of optical energy.

A laser radar system is further provided according to the embodiments. The laser radar system includes an information processing module and the optical system of the laser radar according to any of the above embodiments, and can provide any of the advantageous effects in the above embodiments.

The information processing module is configured to output target information based on the light detection value outputted by the optical system of the laser radar. The laser radar system may further include various digital processing conversion circuits and drive circuit boards for laser radar detection, etc., and is not limited in the embodiments.

The above described embodiments are only intended to describe, rather than limiting, the technical solutions of the present disclosure. Although the present disclosure is described in detail with reference to the above embodiments, it should be understood by those skilled in the art that it is still possible to make modifications to the technical solutions described in any of the above embodiments, or to make equivalent replacements for some of the technical features thereof. Such modifications or replacements do not depart the essence of corresponding technical solutions from the spirit and scope of the technical solutions of the embodiments of the present disclosure, and shall be included within the protection scope of the present disclosure.

## Claims

1. An optical system of a laser radar, comprising:
a laser emitting module;
a beam splitting conversion module;
a first lens group;
a reflective mirror group;
a Micro-Electro-Mechanical System (MEMS) scanning module; and
a laser receiving module, wherein:
the laser emitting module is configured to emit an initial beam;
the beam splitting conversion module is configured to split the initial beam and output split beams to the first lens group;
the first lens group is disposed on a side of the beam splitting conversion module on which a beam is outputted in a first direction, comprises at least two focusing lenses having different focal lengths, and is configured to focus the split beams to obtain at least two focused beams and output the at least two focused beams to the reflective mirror group;
the reflective mirror group comprises at least two reflective mirrors and is configured to reflect the received at least two focused beams to the MEMS scanning module, the at least two reflective mirrors corresponding to the at least two focusing lenses in the first lens group in a one-to-one correspondence;
the MEMS scanning module is configured to reflect the received at least two focused beams at a controllable deflection angle, receive return light formed by the received at least two focused beams when being reflected back, and reflect the return light to the reflective mirror group;
the reflective mirror group is further configured to reflect the return light to the first lens group, and the return light is outputted to the beam splitting conversion module via the first lens group;
the beam splitting conversion module is further configured to output the received return light to the laser receiving module; and
the laser receiving module is disposed on a side of the beam splitting conversion module on which a beam is outputted in a second direction, and is configured to output a light detection value based on the received return light.

2. The optical system of the laser radar according to claim 1, wherein the laser emitting module comprises:
a laser group configured to emit the initial beam; and
a collimating lens group disposed on a side of the laser group on which a beam is emitted, and configured to collimate and output the initial beam.

3. The optical system of the laser radar according to claim 1, wherein:
the beam splitting conversion module comprises a beam splitting unit and a quarter-wave plate, the beam splitting unit comprising a polarizing beam splitter;
the beam splitting unit is disposed on a side of the laser emitting module on which a beam is outputted, and is configured to split the initial beam and output linearly polarized light to the quarter-wave plate, or is configured to output linearly polarized light outputted by the quarter-wave plate to the laser receiving module;
the quarter-wave plate is configured to convert the linearly polarized light into circularly polarized light or convert circularly polarized light into linearly polarized light; and
each of the beam splitting unit, the quarter-wave plate, and the first lens group is disposed in the first direction.

4. The optical system of the laser radar according to claim 3, wherein double-side coating is performed on the quarter-wave plate and each of the at least two focusing lenses in the first lens group.

5. The optical system of the laser radar according to claim 1, wherein each of the at least two reflective mirrors in the reflective mirror group is a dielectric film reflective mirror or a metallic reflective mirror.

6. The optical system of the laser radar according to claim 1, further comprising:
a beam expanding lens configured to expand and output the at least two focused beams reflected by the MEMS scanning module.

7. The optical system of the laser radar according to claim 1, wherein positions of focal points of the at least two focused beams reflected by the reflective mirror group are at equal distances from a position of a center point of the MEMS scanning module.

8. The optical system of the laser radar according to claim 1, wherein in focal points of the at least two focused beams reflected by the reflective mirror group, an included angle between focal points of any two adjacent focused beams of the at least two focused beams, with a center point of the MEMS scanning module as a vertex, is equal to a predetermined multiple of a maximum swing angle of the MEMS scanning module.

9. The optical system of the laser radar according to claim 1, wherein the predetermined multiple is 4.

10. The optical system of the laser radar according to claim 1, wherein the first direction is perpendicular to the second direction.

11. The optical system of the laser radar according to any one of claims 1 to 10, wherein:
the laser receiving module comprises a second lens group and a photosensitive detection module;
the second lens group comprises at least two focusing lenses having a same focal length, each of the at least two focusing lenses being configured to focus received linearly polarized light onto the photosensitive detection module, and the number of focusing lenses in the second lens group being identical to the number of focusing lenses in the first lens group;
the photosensitive detection module is disposed on a side of the second lens group on which a beam is outputted and comprises at least two photosensitive detectors, the at least two photosensitive detectors corresponding to the at least two focusing lenses in the second lens group in a one-to-one correspondence; and
each of the at least two photosensitive detectors is configured to receive a beam focused by a corresponding focusing lens and output a corresponding light detection value.

12. A laser radar system, comprising:
an information processing module; and
the optical system of the laser radar according to any one of claims 1 to 11,
wherein the information processing module is configured to output target information based on the light detection value outputted by the optical system of the laser radar.
